(19) **Europäisches Patentamt / European Patent Office / Office européen des brevets**

(11) **EP 1 796 012 B1**

(12) **EUROPEAN PATENT SPECIFICATION**

(45) Date of publication and mention
of the grant of the patent:
**01.10.2008 Bulletin 2008/40**

(51) Int Cl.:
*G06F 21/00* (2006.01)

(21) Application number: **05111797.6**

(22) Date of filing: **07.12.2005**

(54) **Authentication method and apparatus**

Authentifizierungsverfahren und -vorrichtung

Procédé et appareil d'authentification

(84) Designated Contracting States:
**DE GB**

(43) Date of publication of application:
**13.06.2007 Bulletin 2007/24**

(73) Proprietor: **NTT DoCoMo, Inc.
Tokyo (JP)**

(72) Inventor: **Kounga, Gina
35200 Rennes (FR)**

(74) Representative: **Betten & Resch
Patentanwälte
Theatinerstrasse 8
80333 München (DE)**

(56) References cited:
**WO-A-20/04104797**

- **A. MENEZES, P. VAN OORSCHOT, AND S. VANSTONE: "HANDBOOK OF APPLIED CRYPTOGRAPHY" 1997, CRC PRESS, INC , XP002375377 * page 405 - page 412 ***

**Description**

FIELD OF INVENTION

The present invention relates to a method and an apparatus for performing an authentication.

BACKGROUND OF THE INVENTION

In computer networks, many services can only be provided if identities of nodes are guaranted. This is the case for security services like access control or confidentiality. It is also the case for a more basic service like routing. If there is no solution to guarantee the correctness of a binding between an IP address and a node no routing protocol can guarantee the correct delivery of a message to the right destination. The required guarantees regarding nodes' identities are traditionally provided thanks to central administration authorities or dedicated entities. But such entities can not be found in every environment. This is particularly a problem in the field of ad-hoc networks. Since (mobile) ad-hoc networks are infrastructureless and self-organized, no central administration authority or dedicated entity can be found. This lack of administrative control has the effect that malicious behaviors that lead to a change of a network address can not be detected.

Network addresses are not the only kind of information that permits to identify nodes. Other identification information like PKCs (Public Key Certificates) or secret encryption keys can be used. However, in order to ensure that any entity actually is the entity it pretends to be, a process that permits to guarantee the correctness and the validity of the binding between identification information and an entity(a "node") in the network is needed, and such a process typically is referred to as entity authentication or authentication.

A particularly interesting field for authentication mechanisms are ad-hoc networks. They are interesting because they permit to increase the coverage area in which services are provided without relying on any infrastructure. This can permit mobile network providers to reduce their exploitation costs. In order to deploy the services they usually provide in their networks - like phone calls - mobile networks providers will have to offer the same guarantees - regarding the quality of the services they offer - in ad-hoc networks as in their traditional networks. This means that any customer in an ad-hoc network should have the ability to call someone and to be sure that the network will establish a connection with the right callee. It also means e.g. that when an MMS (Multimedia Messaging Service) will be sent by a customer that is in an ad-hoc network, it will be required to guarantee that the message will be delivered at the right destination. These examples highlight the fact that routing, which is one of the most basic services that permits a network to work properly, needs identities of nodes to be guaranteed in order to deliver messages to the right destinations. Therefore no service can efficiently be deployed in ad-hoc networks if the identity of nodes is not guaranteed.

Accordingly for ad-hoc networks there is a strong need for verifying the identity of a node. However, entity authentication is a problem in ad-hoc networks because the fact that nodes often not know each other implies that they may not share a common secret. Therefore traditional authentication solutions based on secret key mechanisms which rely on the fact that two entities share a secret cannot be used. The only way to permit two nodes that share no common knowledge to authenticate is to use public key based mechanisms. But when public key based authentication mechanisms are used like those that rely on PKCs (Public Key Certificates) there is no way to guarantee the validity of these certificates. This is because there is the fundamental problem that there is no way of obtaining the required up to date revocation information in an ad-hoc network as will be explained in the following.

When a certificate is issued it is expected to be in use for its entire validity period. But various circumstances may cause a certificate to become invalid prior to the expiration of its validity period like: a change of name, a compromise or a suspected compromise of the corresponding private key. Many reasons can lead to the compromise of the private key like its loss or its disclosure. When this happens a certificate has to be revoked. This is traditionally made thanks to revocation mechanisms that rely on central authorities - like certification authorities (CAs), OCSP responders or repositories - in order to enable the nodes of the network to identify the public keys which must not be used anymore because they are not anymore associated with their legitimate owners. This is the reason why revocation mechanisms are required whenever certificates are used.

However, since existing revocation solutions rely on central entities -while ad-hoc networks are infrastructureless and have no central entity - the traditional approaches cannot be used in ad-hoc networks. Therefore it is required to provide a mechanism that will permit to guarantee that a certificate used in an ad-hoc network is used by its legitimate owner.

As mentioned, the fact that nodes may not access to a online third party (TTP) and may not know each other imply that they may not share a common secret which makes a shared secret inappropriate for authentication. However, also the use of public key mechanisms for authentication in ad-hoc networks poses problems. The difficulty to define public key authentication mechanisms adapted to ad-hoc networks comes from the risk of compromise of public/private key pairs. Since this kind of key pairs can be compromised they can be used by other nodes than their legitimate owners.

Therefore, when it is not possible to know the revocation status of a public/private key, giving the proof that the private key associated to a public key is known does not always permit to identify the legitimate owner of a public/private key pair. This shows the limits of the solutions generally used to provide node authentication.

When a key is compromised a node that has to perform authentication is not able to make the difference between the real owner of a certificate and an attacker.

Accordingly, there is a need for providing an authentication method which overcomes the deficiencies of the conventional methods.

SUMMARY OF THE INVENTION

According to one embodiment there is followed an approach based on associating to public (non-secret) information $m_p$ contained in a certificate some public information $S_P$ which, however, is based on $m_p$ and a secret key $x_p$ only known by the legitimate owner of the certificate and the issuer of the certificate and which has been calculated in a manner which does not disclose $x_p$. That way by a computer-implemented method of verifying in a communications network the identity of a proving node P by a verifying node V to verify said node P as the legitimate owner of a public key certificate C, said method comprising:

proving by said node P to said verifying node V that node P knows the secret key $x_p$ without disclosing $x_p$, whereas:

said secret key $x_p$ is a secret knowledge shared by said node P and a certification authority CA which has issued said certificate C to node P,

said certificate C which has been issued to P by said certification authority comprises :

the public key of said proving node;
one or more non-secret elements $m_p$ identifying the identity of the owner of the certificate to which said certificate C was issued and the certification authority,
a non-secret value $S_P$ which has been generated using a cryptographic method based on said secret value $x_p$ and one or more other non-secret elements $m_p$ of said certificate C in such a manner that the thus generated value $S_P$ is based on but does not disclose $x_p$, said a non-secret value $S_P$ being a signature of one or more other non-secret elements $m_p$ of said certificate, said signature having been generated based on raising $m_p$ to $x_p$ ; and said certificate further comprising:

a signature which has been generated based on $S_P$ and on one or more other non-secret elements of said certificate using the private key of said certification authority;

whereas said proving to verifier V the knowledge of $x_p$ without disclosing $x_p$ by using $S_P$ verifies P as the legitimate owner of certificate C, whereas said proving comprises:

choosing a random value a by said verifying node V and generating a challenge based on raising $m_p$ to a or on raising $S_P$ to a, said challenge being forwarded to node P;
raising by node P said challenge to $x_p$ if said challenge is based on $m_p$ or to $1/x_p$ if said challenge is based on $S_P$ and forwarding the result to node V as said proof; and
verifying the identity of P by comparing the proof forwarded from node P to node V with a value calculated by node V through raising either $S_P$ or $m_p$ to a.

According to one embodiment there is followed an approach based on associating to public (non-secret) information $m_p$ contained in a certificate some public information $S_P$ which, however, is based on $m_p$ and a secret key $x_p$ only known by the legitimate owner of the certificate and the issuer of the certificate and which has been calculated in a manner which does not disclose $x_p$. That way by proving the knowledge of $x_p$ without disclosing its actual value only the legitimate owner of the certificate will be identifiable.

To keep the method safe the information $x_p$ to be kept secret and is never disclosed and only known by the owner of the certificate and the certification authority. This can be guaranteed e.g, by distributing the secret key in a secure manner and by storing that key on a tamper proof hardware or by requiring a password to be entered in order the key be generated and used by a mobile device. So according to one embodiment the mechanism may comprise:

■ A secret key $x_p$ -that will never be disclosed - is distributed in a secure way by a CA $CA_1$ to a node P
■ that secret key $x_p$ is associated to the certificate C that P received from $CA_1$ -in a way that does not expose $x_p$

■ a node V that will have to authenticate P will be sure that P is the legitimate owner of C and that C has not been revoked if P is able to prove him the knowledge of the secret key $x_p$ without disclosing it.

Since the secret key will never be disclosed, even if the public/private key pair is compromised, only the legitimate owner of the certificate will be able to prove the knowledge of $x_p$ and thus only P will be identified as the legitimate owner of the certificate and it will be possible to know that the public key/private key pair is still valid..

According to one embodiment said method is used for verifying that certificate C, used by a proving node P to prove its identity to a node V, has not been revoked, and for verifying the identity of node P even when no connectivity to a fixed network is available and for verifying that the public/private key pair associated to certificate C has not been compromised.

According to one embodiment said non-secret value $S_p$ has been generated using a cryptographic function k as $S_p = k\,(m_p, x_p)$, and said method comprises:

generating a challenge f by said node V based on an arbitrary number a as

$$f = f\,(\,a,\,g\,(\,m_p\,,\,x_p\,)\,)$$

and forwarding said challenge to node P;
generating by said node P a proof R as

$$R\,(\,x_p\,,f\,(\,a,\,g\,(\,m_p\,,\,x_p\,)\,)\,),$$

whereas the function R and a further function R' are chosen such that the proof can be verified by node V through recalculating the proof without knowing the value $x_p$ using the function

$$R' = R'\,(\,m_p\,,S_p\,,\,a\,)$$

This makes it possible for the verifying node V to know that P's certificate has not been revoked and therefore to perform an authentication to verify P's identity even without knowing $x_p$.

According to one embodiment the authentication method comprises:

receiving by said verifying node a message comprising said value $S_P$ which has been calculated based on raising $m_p$ to $x_p$;
choosing a random value a by said verifying node and generating a challenge based on raising $m_p$ to a or on raising $S_p$ to a, said challenge being forwarded to node P;
raising by node P said challenge to $x_p$ if said challenge is based on $m_p$ or to $1/x_p$ if said challenge is based on $S_p$ and forwarding the result to node V; and
verifying the identity of P by comparing the result forwarded from node P to node V with a value calculated by node V through raising either $S_P$ or $m_p$ to a.

The foregoing embodiment enables a node P that has received a secret key $x_p$ from a certification authority CA to prove to a node V - it never met - that it shares the secret key $x_p$ with CA without disclosing that secret key.

Thus the mechanism permits to identify the legitimate owner of a certificate even when the associated key pair has been compromised. Therefore it permits to know if a public/private key pair has been revoked. The mechanism is a secret key based mechanism based on secret key $x_p$ which prevents other nodes than the legitimate owner of a certificate from using that certificate. As a result, the risk a node be impersonated by an attacker in an ad-hoc network or in any other network is negligible.

The mechanism guarantees that only the legitimate owner of a certificate will be identified as the legitimate owner of a public key even if his public/private key pair has been compromised. Moreover, it permits to avoid the use of a compromised key by an attacker. For these reasons, the solution permits to provide efficient entity authentication in ad-hoc networks.

According to one embodiment the method comprises: encrypting said challenge generated by node V with the public key of node P and forwarding said challenge to P in an encrypted manner;
decrypting the received encrypted challenge by node P using its private key.

The usage of the encryption using the public/private key pair of P increases the security.

According to one embodiment the method comprises:

adding to said challenge a value identifying verifying node V;
forwarding said challenge including said added value to node P;
encrypting said challenge including said added value by P using the private key of P and forwarding the thus encrypted challenge to node V.

The addition of a value identifying V makes it difficult to apply a replay attack because the intended verifying node has to cooperate in the procedure with its own unique identity.

According to one embodiment the added value comprises:

a value $S_V$ which has been generated using a cryptographic method based on secret value $x_V$ shared by node V and a certification authority and one or more other non-secret elements $m_V$ of a certificate C of node V in such a manner that the thus generated value $S_V$ is based on but does not disclose $x_V$.

The value $S_V$ uniquely identifies node V in the same manner as does $S_P$, and therefore is preferable over e.g. the public key of V which in principle could also be used but which may have been compromised and therefore is less preferable.

According to one embodiment the method comprises:

adding a session identifier and/or a nonce to said message which is forwarded to V when presenting said value $S_P$ to said node V;
further adding an encrypted version of said message which is generated based on the private key of node P;
adding a session identifier and/or a nonce to said challenge which is generated by node V and forwarded to node P;
encrypting said challenge using the private key of node V;
encrypting said challenge using the public key of node P.

The usage of session identifiers and/or nonces increases the security of the method.

According to one embodiment the method further comprises:

adding session identifier $sid_P$ and/or a nonce $n_P$ to said message which is forwarded to V when presenting said value $S_P$ to said node V;
further adding an encrypted version of said message with the private key of node P;
adding a session identifier $sid_V$ and the said session identifier $sid_P$ previously sent by P, to said $S_V$ and to said challenge which is generated by node V;
encrypting a first value comprising said challenge, said session identifier $sid_v$, said $S_V$, said nonce $n_P$ that can be incremented by one and a nonce $n_V$, using the private key of node V;
encrypting a second value comprising said challenge, said nonce $n_P$ that can be incremented by one, said nonce $n_v$ and said values $val_1$ encrypted with the private key of node V, using the public key of node P;
forwarding of said $sid_P$, said $Sid_V$, said $S_V$ and the said second value encrypted with the public key of node P
encrypting a third value comprising said proof, said $S_V$, said value identifying node P, said nonce $n_V$ that can be incremented by one, using the private key of node P;
encrypting a fourth value comprising said value identifying node P, said nonce $n_V$ that can be incremented by one and said third value encrypted with the private key of node P, using the public key of node V;
forwarding said session identifiers $sid_P$ and $sid_V$ and said encrypted fourth values encrypted with the public key of node V to node V.

According to one embodiment there is provided a method of generating a certificate to be used to verify the identity of a node P in a network, said method comprising:

distributing knowledge about a secret key $\chi_p$ between a certification authority and node P such that both share said knowledge,
calculating a non-secret value $S_P$ in such a manner that said non-secret value $S_P$ does not disclose secret key $x_p$;
including said non-secret value $S_P$ into a certificate issued to node P by said certification authority, and
adding to said certificate a signature which is generated using the private key of said certification authority and which is based on said non- secret value $S_p$ and on one or more further non-secret elements of said certificate.

A certificate generated by this method can be used for authentication even if the public/private key pair belonging to the owner of the certificate has been compromised.

According to one embodiment said certificate C comprises:

one or more non-secret elements identifying the identity of the owner of the certificate to which said certificate C was issued and the certification authority,
said non-secret element $S_P$, and
a signature which has been generated based on $S_P$ and one or more of said other non-secret elements using the private key of said certification authority.

The certificate in this manner may be a standard certificate including all typical elements like name of the owner, issuer, the owner's public key, an expiration date, etc., however it further includes the public value $S_P$ generated based on secret key $x_p$. Preferably it further includes a signature over one or more of these elements including the value $S_P$ generated using the private key of the certification authority.

According to one embodiment said a non-secret value $S_P$ is calculated based on raising $m_p$ to $x_p$. This enables a proof of the knowledge of $x_p$ by P without disclosing it by making use of a challenge raising $S_P$ or $m_p$ to a which is an arbitrary value chosen by V.

According to one embodiment in addition to its knowledge of secret key $x_p$ node P has knowledge of a public key $e_p$ corresponding to secret key $x_p$ whereas, however, $e_p$ is kept secret by node P unless a revocation request becomes necessary to enable node P to issue a revocation request if necessary based on said public key $e_p$. This provides the possibility for node P to issue a revocation request if necessary.

According to one embodiment there is provided a method of revoking a certificate which has been generated and issued to a node P according to the method of one of the embodiments of the invention, said method of revoking comprising:

generating and disclosing a message comprising $S_p$ and secret key $x_p$ or its corresponding public key, and a signature of said message which has been generated using the private key of node P.

This enables the node P to revoke the certificate and further enables the other nodes of the network to verify the authenticity of the revocation request.

According to one embodiment the method comprises: regularly exchanging revocation messages between nodes of the network.

This keeps the nodes of the network up-to-date about any certificates which may have been revoked.

BRIEF DESCRIPTION OF THE DRAWINGS

Fig. 1A schematically illustrates an embodiment of the invention.

Fig. 1B schematically illustrates a further embodiment of the invention.

Fig. 2 schematically illustrates a certificate according to an embodiment of the invention.

Fig. 3 schematically illustrates the operation of an embodiment of the invention.

Fig. 4 schematically illustrates the operation of a further embodiment of the invention.

DETAILED DESCRIPTION

The invention will now be described in detail in the following by means of exemplary embodiments.

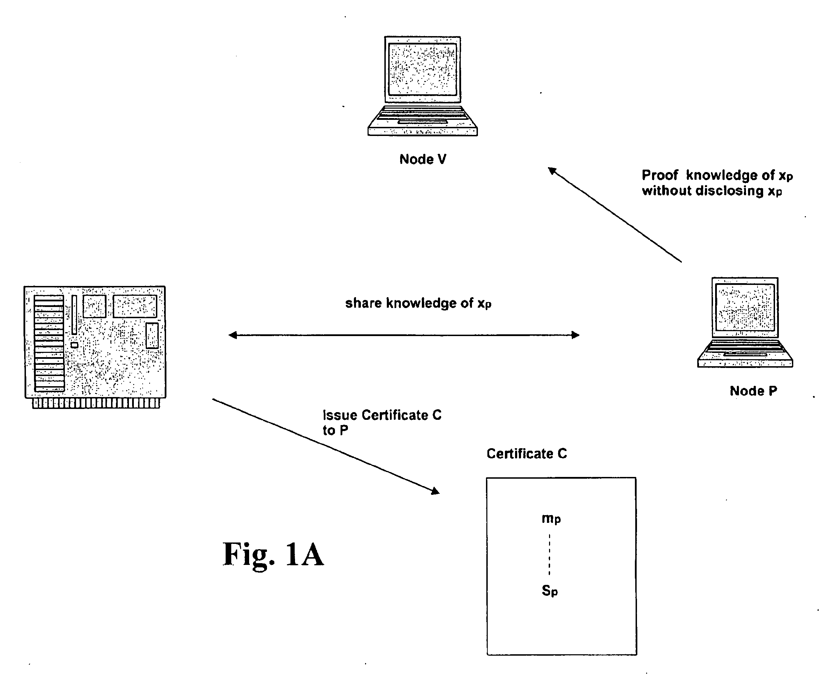

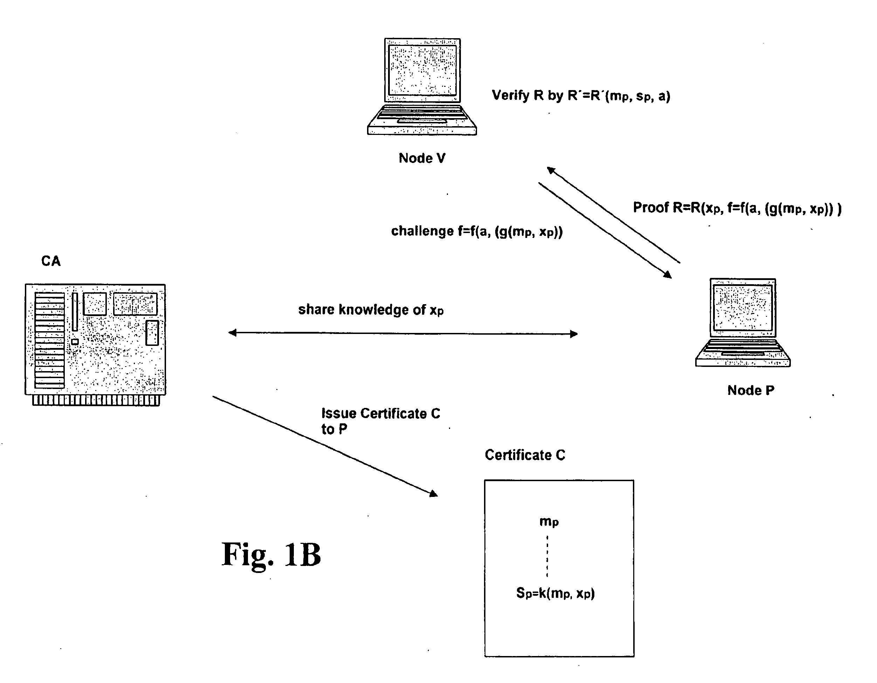

According to one embodiment the node P is to prove its identity to a verifying node V. For that purpose the node P makes use of a certificate which has been issued to it by certification authority CA. Fig. 1A schematically illustrates the relationship between the participants and the operation of an embodiment of the invention.

CA and P share a common secret $x_p$. This secret key $x_p$ may have been distributed by CA to P through a secure channel, or P may have chosen it on its own and CA has approved it. In addition to this shared secret $x_p$ P has

been issued a certificate C by CA, and this certificate - in addition to having associated with it a public/private key pair owned by P has associated with it a value $S_P$ which albeit being public has been generated based on secret key $x_p$. This means that $S_p$ implicitly involves some knowledge about $x_p$, however, this "knowledge" remains implicit because $S_P$ has been generated in such a manner that it is computationally infeasible to deduce $x_p$ from $S_P$.

Nevertheless, public value $S_P$ and the secret value $x_p$ which is an additional secret owned by P in addition to the private key belonging to its certificate are then used to authenticate P towards V. For that purpose P proves to node V that it knows secret key $x_p$ without disclosing it. Thereby the identity proof becomes independent of the public/private key pair owned by P and still works even if this key pair has been compromised.

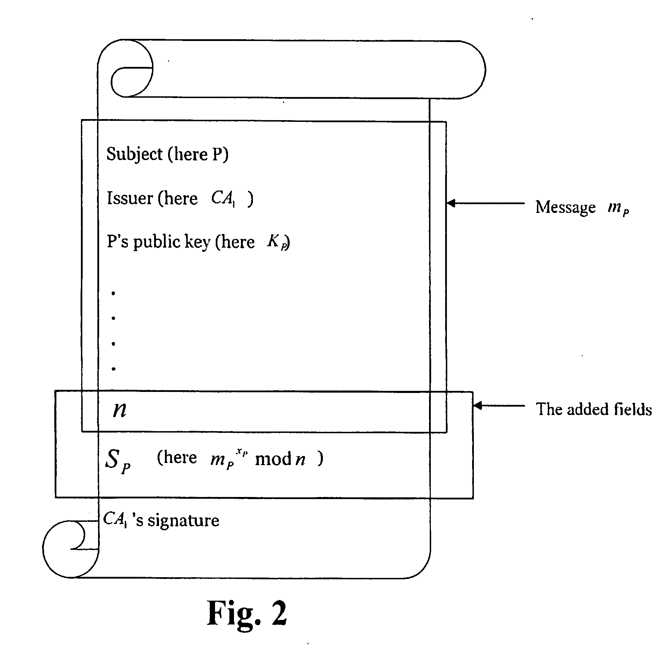

In connection with Fig. 2A there will now be explained a further embodiment of the invention.

As can be seen from Fig. 1A, the non-secret value $S_P$ is based on a cryptographic function k which is defined as $S_p = k\ (m_p, x_p)$.

In order to prove the knowledge of $x_p$ by V at first V sends a challenge f to P which is calculated based on f (a, $g(m_p, x_p)$). a here is an arbitrary number, e.g. a random number, which is chosen by V and known only to V. The function g may be identical to the function k, in this case the challenge takes the form f (a, $S_P$).

However the function g may also be different from k and may e.g. take the form $g(m_p)$ without having involved even an implicit knowledge of $x_p$ when generating challenge f. However, node V has some implicit knowledge about $x_p$ because it knows $S_P$ which is publicly available, e.g. through the certificate owned by node P or through some other source since $S_P$ is public and not secret.

Based on the challenge f then node P calculates a proof value R as

$$R = R\,(\,x_p\,, f\,(\,a,\, g(\,m_p\,,\,x_p\,)))$$

This proof is then forwarded to node V which then in turn verifies the proof by recalculating the proof value based on its knowledge about a, $m_p$ and $S_P$ as a value

$$R' = R'(\,m_p\,,\,S_P\,,\,a)$$

If the proof R and the recalculated proof value R' coincide, the authentication has been successfully performed.

In the following embodiment it will be explained in somewhat more detail how node V can verify that node P actually knows $x_p$ despite node V doesn't know it. To clear the terminology used in the following description, the term $n$ will denote a large number $n$. All values transmitted between the participants are sent modulo $n$. Here $n$ may be defined like in the RSA cryptosystem described in R.L. Rivest, A. Shamir, and L.M. Adleman, A method for obtaining digital signatures and public-key cryptosystems, Communications of the ACM (2) 21 (1978), Page(s):120-126.

However, it should already now be mentioned that the following description is not limited to RSA cryptosystems but other cryptosystems may be employed as well.

For that purpose according to one embodiment there is used the mechanism of digital signature. This choice is explained by the fact that a digital signature is considered to not expose the private key used to generate it to compromise - through breaking- if the requirements regarding parameters like the hash function used, the private key length etc. are met.

In the rest of the document $S = m^{xp} \bmod n$ is considered to denote the digital signature generated on a message $m$ with the secret key $x_p$

It should further be noted that if in the following reference is made to a hash function it intends to refer to a function which when applied to a given starting value returns a resulting hash value based on which the starting value cannot be deduced. The feature that the hash-function should be collision-free which is a requirement for hash-functions used for generating database keys, however, is for the present application of less importance and not mandatory.

In this embodiment a certificate traditionally used in PKIs, such as e.g. the X.509 certificate described in R. Housley, W. Polk, W. Ford, and D. Solo, Internet X.509 Public Key Infrastructure: Certificate and Certificate Revocation List (CRL) Profile, RFC 3280, April 2002.is somewhat modified. In the new format, the certificate C that certification authority $CA_1$ issues to P contains one or more extra elements which are e.g. a digital signature $S_{p'} = m_P^{x_{p'}} \bmod n$ that is generated on the message $m_P$ with the secret key $x_p$ - that P shares with $CA_1$- and the value $n$ used to generate that signature. The certificate format is schematically illustrated in Figure 2. The most important element thereby is the

digital signature $S_p$ which distinguishes it from known certificates and which enables the operation of the embodiment of the invention.

Here $m_P$ represents a message generated with the fields that precede $S_P$ in P's certificate. It should be mentioned here $m_P$ does not need to include all the fields preceding $S_P$, it is sufficient if it includes one of the public information elements in the certificate. Since this information is public any node is then able to generate $m_p$. The only requirement is that the public information elements used to generate $m_p$ can be easily identified. However, $S_P$ is generated by $CA_1$ (or P) and actually can only be generated by one of these entities because only they know $\chi_p$

It should be noted here that $S_p$ not necessarily has to be included in the certificate, it is sufficient if it is "associated" with the certificate such that any interested entity can obtain $S_p$ and can identify it as the value $S_p$ belonging to the certificate C.

Since the certificate is signed by $CA_1$ using its own private key, any node V that will have to verify the authenticity of the certificate will have the confidence that $S_p$ has been generated by $CA_1$ or is valid as soon as $CA_1$'s signature on the certificate will be correct.

According to one embodiment this new certificate is used in order to provide entity authentication. The embodiment permits a node P - the prover - to prove to a node V- that is the verifier and that P may have never met - that it knows the secret key $x_p$ used to generate the signature $S_P = m_P^{x_P}$ mod $n$ associated to the public key certificate C without disclosing $x_p$. This permits V to identify P as the legitimate owner of C.

A known mechanism to verify that node P knows the secret key used to generate a signature would be the traditional check of the validity of a signature with the public key associated to the private key that was used to generate that signature

However, since the private key associated with a public key can be compromised, checking the validity of the signature $S_P = m_P^{x_P}$ mod $n$ with the right public key will not permit to be sure that the owner of the private key which corresponds to that public key is the one that initially received the secret key $x_p$ from the CA.

In particular it can be seen that the traditional proof based signature verification using a public/private key pair requires revocation mechanisms to be used because these keys can be compromised. Therefore, using these solutions will make us enter a circle: signatures are added in certificates to perform revocation and revocation is required to check these signatures. This is why the approach according to an embodiment of the invention does not rely on public key mechanisms. Instead there is chosen to use secret key mechanisms to check the validity of the signature $S_p$ on P's certificate. If P's secret key is securely stored in a tamper proof hardware like the SIM card used in GSM or is not directly stored in the mobile device but generated after a password is enter by the user it can be assumed that it does not require to be revoked.

Therefore a different approach is used which will be explained in the following.

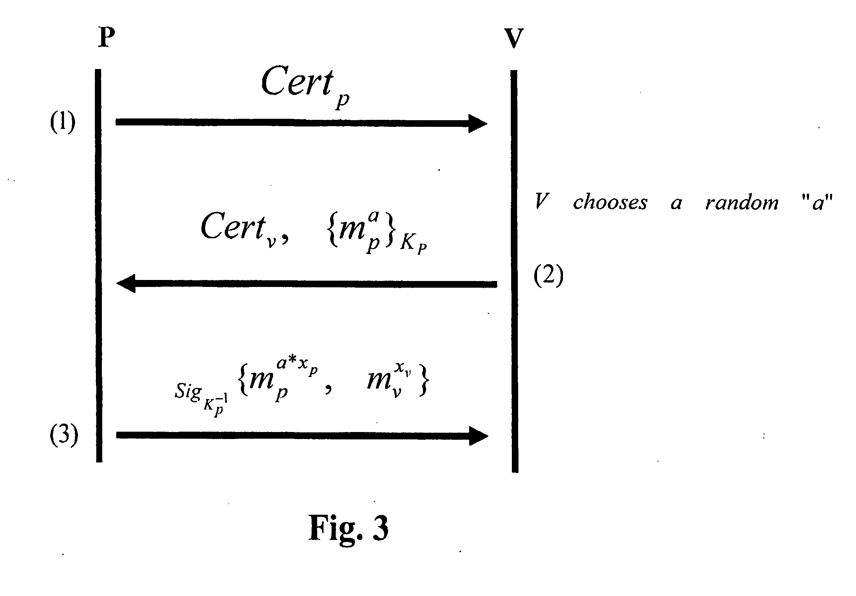

Fig 3 schematically illustrates the operation of an authentication method according to this embodiment.

Before explaining in detail the operation of the embodiment shown in Fig. 3, the terminology used therein is explained in the following.

*Notation:*

$Cert_P$ : *P's public key certificate*
$K_P$ : *P's public key*
$\{m\}_{K_P}$ : *encryption of the message m with P's public key*

$$Sig_{K_P^{-1}}^{\{x_1, x_2, \ldots, x_n\}} :$$ : *signature generated with P's private key on the message composed of the elements* $x_1, x_2, \ldots, x_n$.

$m_v^{x_v}$ : *The signature generated by $CA_1$ on V's certificate with the secret key $x_v$ that $CA_1$ shares with V*

At message (1) P sends its certificate in order to launch the authentication process.

It should be mentioned that instead of sending the (full) certificate P may also only send $S_P$. As still another an alternative the node P may send any message indicating that the authentication procedure should start, and then node V receives somehow $S_P$. This can also be achieved by having $S_p$ actively retrieved though node V from some database where it is stored. What should, however, be the result of step (1) is that node V finally has received $S_p$ and thereby has received "implicit" knowledge about secret key $x_p$ which is explicitly known only by node P and CA.

Assuming now that in message (1) V has received the full certificate of node V. When receiving the message (1), V preferably checks the validity of the CA's signature - present in the received certificate. If it is correct, it selects a random value a, generates a challenge by raising $m_p$ - that it will have previously composed thanks to P's certificate- to a and obtains $m_p^a$. Then V sends that challenge along with its certificate to P as message (2). Instead of sending the full certificate V may also just send $m_v^{x_v}$. Preferably the challenge is encrypted with P's public key. After it has received the message (2) and if it has been encrypted, P decrypts the challenge with its private key. Once the decryption done, P uses its secret key to raise the challenge to $x_p$ and obtains $\left(m_p^{a}\right)^{x_p}$.

Then it uses the result, $m_v^{x_v}$ - this element is taken from V's certificate - and its private key $K_P^{-1}$ to generate a signature. That signature is sent to V as message (3). When V receives the message (3), it uses $m_p^{x_p}$ present in P's certificate, raises it to a and obtains a result $R = (m_p^{x_p})^a = (m_P^a)^{x_p}$. Then V uses the value $m_v^{x_v}$ - that is in its certificate - and R to generate a hash that it will compare to the one obtained by decrypting the received signature with P's public key $K_P$. If the compared values are identical then, V will have the confidence that it is the entity that received $x_P$ from $CA_1$ -i.e. the legitimate P- that generated the proof. This will further permit V to know that the certificate has not been revoked and to identify P. Since to check the validity of the proof sent by P, the verifier has to verify the validity of the hash used for the signature, no node except the one that generated the random value $\alpha$ is able to check the correctness of the proof. Here the non-reversible property of one way hash functions is used. Moreover, since $m_v^{x_v}$

-that is used here to identify the verifier- is used to generate the signature, it will not be possible to replay the proof to another node than V.

It should be mentioned that here there is used $m_v^{x_v}$ and not V's public key because the fact that public/private key pairs can be compromised makes that using a public key will not always permit to identify one unique entity. However, since only the legitimate V knows the $x_v$ associated to $m_v^{x_v}$ one can be sure that only the legitimate entity will be identified with it. So it will only be possible to replay the proof to the legitimate V.

A difference between the solution according to this embodiment and any previous approach is that while these approaches wanted to prove that a signature and a public key have a common exponent - the private key- in the present embodiment it is only necessary to verify that a signature generated by the CA has been generated with an exponent whose value is known by the prover. This makes it possible to transform the initial public key based approach into a secret key based approach. Another difference comes from the fact that in the present embodiment, the whole proof is only accessible to the verifier through a hash generated thanks to a one way hash function. Since they are non-reversible, the secret that the prover shares with the CA can not be computed by the verifier.

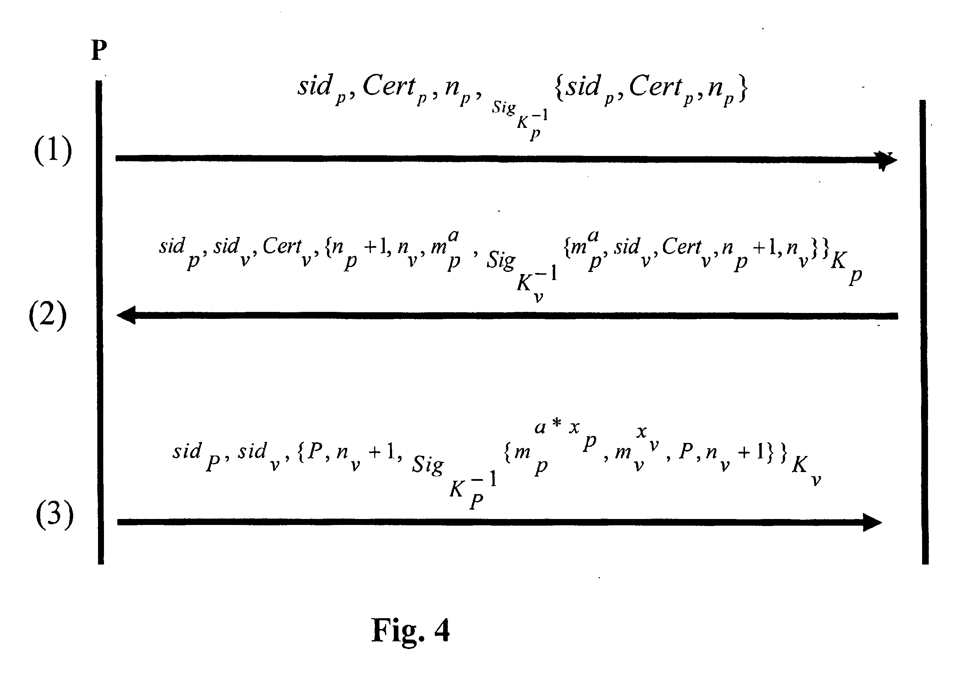

In the following there will be explained in connection with Fig. 4 a further embodiment of the invention.

The Figure 4 schematically presents an even more robust version of an authentication method. Here there is used the same notation than previously used, but there are added:

■ $sid_P$, $sid_V$ : the session identifiers chosen by each party for the on going authentication process
■ $n_P, n_V$ : nonces used to guarantee the freshness of the messages

The signature is used here in order to link the knowledge of the private key associated with a public key to the knowledge of a secret key shared with a CA. This permits to be sure that the node that currently uses the private key associated to a public key is the one that received the secret key from the CA and therefore it is the legitimate owner of the certificate.

In connection with this embodiment the following should be noted:

■ Mutual authentication can be provided by adding a challenge that P will send to V at message (3) and that V will respond in a message (4).
■ Even in case of compromise of the public/private key pair associated with the certificate only the legitimate owner of the certificate will be authenticated as the legitimate owner of the key pair.

In order to take into account the specific circumstances arising in the case of ad-hoc networks, according to one embodiment there is provided an efficient revocation mechanism.

In this embodiment, revocation can be provided by the legitimate owner of a certificate by sending the following request:

$$Cert_P, \quad e_P, \quad Sig_{K_P^{-1}}\{Cert_P, \quad e_P\}$$

This request will be sent to all nodes in the network. Edge nodes or gateways may also distribute it to neighboring networks so that the knowledge about revoked certificates will be efficiently distributed.

Revocation in this embodiment is made by disclosing the public key $e_p$ - like e.g. the one defined in the RSA cryptosystem mentioned already - associated to the secret key $x_p$. Since $x_p$ is never disclosed, only the node that received it from the CA is able to publish a valid public key that permits to verify $S_p = m_p^{x_p}$ . . By receiving the request, nodes will check the correctness of the received signature with P's public key- contained in P's certificate- and then check the validity of $S_p$ with $e_p$. Thereby they can verify the authenticity of the revocation request.

If all the verifications are correct then nodes will have the confidence that the request was sent by the legitimate owner of the certificate. They will consider that P's certificate is not valid anymore and put it in their revocation list. Once a certificate is in a revocation list the public key associated to it is not used anymore.

According to one embodiment the revocation solution can be enriched by a regular exchange of revocation information between nodes. This permits new members of the ad-hoc network to obtain information about certificates that have been revoked before they entry in the network. It will also permit newly arrived nodes to inform the ad-hoc network about keys that have been revoked in their previous networks. After a node has revoked its certificate it will have to use a new one. So each node will have to store more than one certificate.

According to another embodiment a way to perform revocation could be to disclose $x_p$. This solution, however, is less preferable because then an attacker N will be able to leave the network after the disclosure of the secret key and to use it in another network to impersonate the emitter of the revocation request.

The interesting point when $e_P$ is disclosed is that it does not directly expose the secret key to compromise. To be able to generate a valid proof N would have to break $e_P$ - i.e. to find $x_p$ from $e_P$. Since modern cryptography relies on the difficulty to find a private key from the corresponding public key the risk a public key be broken is almost negligible.

This revocation solution permits the whole network to know which key has to be considered invalid and also guarantees that no node in the network will be impersonated by a node that will have compromised its public/private key pair. It also reduces significantly the risk of impersonation attack in a different network than the one of the legitimate owner of a certificate.

It will be apparent to the skilled person that modifications of the embodiments described hereinbefore are possible for the skilled person without deriving from the scope of the invention. In particular the following should be noted in connection with the present and previous embodiments and possible modifications.

So far it has been considered that the secret key $x_p$ was distributed by a CA - here CA$_1$. This is not a necessity. Indeed, node P can choose by itself its secret key $x_p$. Then, during the certificate issuance process, P will present the signature $S_p = m_p^{x_p}$ mod $n$ - that it will have generated by itself - to the CA and prove to it the knowledge of the corresponding secret key. The CA will then check that the signature is not used by another node. If it is not used, the CA will be able to generate a certificate. There may be further a check of the identity of P through some "classical means" like a passport or any "human identification" before the CA certifies by issuing the certificate that P indeed is P and not anybody else who pretends to be P.

Furthermore, the large number $n$ used to generate the signatures can be different from a certificate to another one.

While in the foregoing embodiments mostly RSA has been chosen as an example, it should be noted that the embodiments of the invention can also be implemented with different cryptosystems.

In the authentication methods described before in connection with Fig.3, it is possible to send in the message (2) the challenge $m_P^{x_{p'}*a}$ instead of sending $m_P^a$. .

The proof sent at message (3) will then be: $Sig_{K_P^{-1}}\{m_P^a, m_V^{x_V}\}$

The same modification can be made in the complete version of the protocol defined in Figure 4. This also permits to identify the node P.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A computer-implemented method of verifying in a computer network the identity of a proving node P by a verifying node V to verify said node P as the legitimate owner of a public key certificate C, said method comprising:

   proving by said node P to said verifying node V that node P knows the secret key $x_p$ without disclosing $x_p$, whereas:

   said secret key $x_p$ is a secret knowledge shared by said node P and a certification authority CA which has issued said certificate C to node P,
   said certificate C which has been issued to P by said certification authority comprises :

   the public key of said proving node;
   one or more non-secret elements $m_p$ identifying the identity of the owner of the certificate to which said certificate C was issued and the certification authority,
   a non-secret value $S_P$ which has been generated using a cryptographic method based on said secret value $x_p$ and one or more other non-secret elements $m_p$ of said certificate C in such a manner that the thus generated value $S_P$ is based on but does not disclose $x_p$, said a non-secret value $S_P$ being a signature of one or more other non-secret elements $m_p$ of said certificate, said signature having been generated based on raising $m_p$ to $x_p$; and said certificate further comprising:

   a signature which has been generated based on $S_P$ and on one or more other non-secret elements of said certificate using the private key of said certification authority;

   whereas said proving to verifier V the knowledge of $x_p$ without disclosing $x_p$ by using $S_P$ verifies P as the legitimate owner of certificate C, whereas said proving comprises:

   choosing a random value a by said verifying node V and generating a challenge based on raising $m_p$ to a or on raising $S_P$ to a, said challenge being forwarded to node P;
   raising by node P said challenge to $x_p$ if said challenge is based on $m_p$ or to $1/x_p$ if said challenge is based on $S_P$ and forwarding the result to node V as said proof; and
   verifying the identity of P by comparing the proof forwarded from node P to node V with a value calculated by node V through raising either $S_P$ or $m_p$ to a.

2. The method of claim 1, wherein said method is used for verifying that certificate C, used by a proving node P to prove its identity to a node V, has not been revoked, and/or for verifying the identify of node P even when no connectivity to a fixed network is available and/or for verifying that the public/private key pair associated to certificate C has not been compromised.

3. The method of claim 1 or 2, wherein said non-secret value $S_P$ has been generated using a cryptographic function k as $S_P = k\,(m_p\,,\,x_p)$, and said method comprises:

generating a challenge f by said node V based on an arbitrary number a as

$$f = f\,(\,a, g(m_p\,,\,x_p\,))$$

and forwarding said challenge to node P;
generating by said node P a proof R as

$$R\,(\,x_p\,,f\,(\,a, g(m_p\,,\,x_p\,)))$$

and forwarding said proof to node V,
whereas the function R and a further function R' are chosen such that the proof can be verified by node V through recalculating the proof without knowing the value $x_p$ using the function

$$R' = R'\,(m_p\,,S_P\,, a);$$

verifying said proof R by said node V with said function R' = R' $(m_p, S_P, a)$.

4. The method of one of claims 1 to 3, further comprising:

encrypting said challenge generated by node V with the public key of node P and forwarding said challenge to P in an encrypted manner;
decrypting the received encrypted challenge by node P using its private key.

5. The method of one of claims 1 to 4, further comprising:

adding to said challenge a value identifying verifying node V;
forwarding said challenge including said added value to node P;
encrypting said challenge including said added value by P using the private key of P and forwarding the thus encrypted challenge to node V.

6. The method of claim 5, wherein said added value comprises:

a value $S_V$ which has been generated using a cryptographic method based on secret value $x_V$ shared by node V and a certification authority and one or more other non-secret elements $m_V$ of a certificate of node V in such a manner that the thus generated value $S_V$ is based on but does not disclose $x_V$

7. The method of one of claims 1 to 6, further comprising:

adding a session identifier and/or a nonce to said message which is forwarded to V when presenting said value $S_P$ to said node V;
further adding an encrypted version of said message which is generated based on the private key of node P;
adding a session identifier and/or a nonce to said challenge which is generated by node V and forwarded to node P;
encrypting said challenge using the private key of node V;
encrypting said challenge using the public key of node P.

8. The method of one of claims 1 to 7, further comprising:

adding session identifier $sid_P$ and/or a nonce $n_P$ to said message which is forwarded to V when presenting said value $S_P$ to said node V;

further adding an encrypted version of said message with the private key of node P;

adding a session identifier $sid_V$ and the said session identifier $sid_P$ previously sent by P, to said $S_V$ and to said challenge which is generated by node V;

encrypting a first value $val_1$ comprising said challenge, said session identifier $sid_V$, said $S_V$, said nonce $n_P$ that can be incremented by one and a nonce $n_V$, using the private key of node V;

encrypting a second value comprising said challenge, said nonce $n_P$ that can be incremented by one, said nonce $n_V$ and said values $val_1$ encrypted with the private key of node V, using the public key of node P;

forwarding of said $sid_P$, said $sid_V$, said $S_V$ and the said second value encrypted with the public key of node P

encrypting a third value comprising said proof, said $S_V$, said value identifying node P, said nonce $n_V$ that can be incremented by one, using the private key of node P;

encrypting a fourth value comprising said value identifying node P, said nonce $n_V$ that can be incremented by one and said third value encrypted with the private key of node P, using the public key of node V;

forwarding said session identifiers $sid_P$ and $sid_V$ and said encrypted fourth values encrypted with the public key of node V to node V.

**9.** A method of generating a public key certificate to be used to verify the identity of a proving node P in a network as the legitimate owner of said public key certificate, said method comprising:

distributing knowledge about a secret key $x_p$ between a certification authority and node P such that both share said knowledge,

calculating a non-secret value $S_P$ based on one or more public elements $m_p$ of said certificate in such a manner that said non-secret value $S_P$ does not disclose secret key $x_p$;

including said non-secret value $S_P$ into a certificate issued to node P by said certification authority, and adding to said certificate a signature which is generated using the private key of said certification authority and which is based on said non-secret value $S_P$, on one or more further non-secret elements of said certificate,

wherein said certificate C comprises

the public key of said proving node;

one or more non-secret elements identifying the identity of the owner of the certificate to which said certificate C was issued and the certification authority, said non-secret element $S_P$ being a signature of one or more other non-secret elements $m_p$ which has been generated by raising $m_p$ to $x_p$, and

a signature which has been generated based on $S_P$ and on one or more of other non-secret elements of said certificate using the private key of said certification authority, so that the identity of proving node P may be verified by the following steps:.

choosing a random value a by said verifying node V and generating a challenge based on raising $m_p$ to a or on raising $S_P$ to a, said challenge being forwarded to node P;

raising by node P said challenge to $x_p$ if said challenge is based on $m_p$ or to $1/x_p$ if said challenge is based on $S_P$ and forwarding the result to node V as said proof; and

verifying the identity of P by comparing the proof forwarded from node P to node V with a value calculated by node V through raising either $S_P$ or $m_p$ to a.

**10.** The method of claim 9, wherein said non-secret value $S_P$ is calculated based on raising $m_p$, to $x_p$.

**11.** The method of one of claims 1 to 10, wherein in addition to its knowledge of secret key $x_p$ node P has knowledge of a public key $e_p$ or can generate that public key $e_p$ corresponding to secret key $x_p$ whereas, however, $e_p$ is kept secret by node P unless a revocation request becomes necessary to enable node P to issue a revocation request if necessary based on said public key $e_p$.

**12.** A data structure representing a certificate to be used to verify the identity of a node P, whereas said data structure has been generated using the method of claims 9 to 11.

**13.** A method of revoking a certificate which has been generated and issued to a node P according to the method of one of claims 9 to 12, said method comprising:

generating and disclosing a message comprising $S_P$ and secret key $x_p$ or its corresponding public key $e_p$, and

a signature of said message which has been generated using the private key of node P.

14. The method of one of claims 1 to 13, further comprising:

  regularly exchanging revocation information between nodes of the network.

15. An apparatus for verifying in a communications network the identity of a proving node P by a verifying node V to verify said node P as the legitimate owner of a public key certificate C, said apparatus comprising:

  a proving unit for proving by said node P to said verifying node V that node P knows the secret key $x_p$ without disclosing $x_p$, whereas:

  said secret key $x_p$ is a secret knowledge shared by said node P and a certification authority CA which has issued a certificate C to node P,
  said certificate C which has been issued to P by said certification authority comprises:

  the public key of said proving node;
  one or more non-secret elements $m_p$ identifying the identity of the owner of the certificate to which said certificate C was issued and the certification authority,

  a non-secret value $S_P$ which has been generated using a cryptographic method based on said secret value $x_p$ and one or more other non-secret elements $m_p$, of said certificate C in such a manner that the thus generated value $S_P$ is based on but does not disclose $x_p$, said a non-secret value $S_P$ being a signature of said one or more other non-secret elements $m_p$ which has been generated by raising $m_p$ to $x_p$; and said certificate further comprising:

  a signature which has been generated based on $S_P$ and on one or more other non-secret elements using the private key of said certification authority;
  whereas said proving unit proves to verifier V the knowledge of $x_p$ without
  disclosing $x_p$ by using $S_P$ verifies P as the legitimate owner of certificate C and further carries out the following:

  choosing a random value a by said verifying node V and generating a challenge based on raising $m_p$ to a or on raising $S_P$ to a, said challenge being forwarded to node P;
  raising by node P said challenge to $x_p$ if said challenge is based on $m_p$ or to $1/x_p$ if said challenge is based on $S_P$ and forwarding the result to node V as said proof; and
  verifying the identity of P by comparing the proof forwarded from node P to node V with a value calculated by node V through raising either $S_P$ or $m_p$ to a..

16. An apparatus for generating a public key certificate to be used to verify the identity of a proving node P in a network as the legitimate owner of said public key certificate, said apparatus comprising:

  a distributing unit for distributing knowledge about a secret key $x_p$ between a certification authority and node P such that both share said knowledge,
  a calculating unit for calculating a non-secret value $S_P$ based on one or more public elements $m_p$ of said certificate in such a manner that said non-secret value $S_P$ does not disclose secret key $x_p$;
  an incorporation unit for including said non-secret value $S_P$ into a certificate issued to node P by said certification authority, and
  an adding unit for adding to said certificate a signature which is generated using the private key of said certification authority and which is based on said non-secret value $S_P$ and on one or more further non-secret elements of said certificate, wherein said certificate C comprises
  the public key of said proving node;
  one or more non-secret elements identifying the identity of the owner of the certificate to which said certificate C was issued and the certification authority, said non-secret element $S_P$ being a signature of said one or more other non-secret elements $m_p$ which has been generated by raising $m_p$ to $x_p$, and
  a signature which has been generated based on $S_P$ and on one or more of said other non-secret elements using the private key of said certification authority, so that the identity of proving node P may be verified by the follwing steps:.
  choosing a random value a by said verifying node V and generating a challenge based on raising $m_p$ to a or

on raising $S_P$ to a, said challenge being forwarded to node P;
raising by node P said challenge to $x_p$ if said challenge is based on $m_p$ or to $1/x_p$ if said challenge is based on $S_P$ and forwarding the result to node V as said proof; and
verifying the identity of P by comparing the proof forwarded from node P to node V with a value calculated by node V through raising either $S_P$ or $m_p$ to a..

**17.** An apparatus according to claim 17 or 18, further comprising:

means for carrying out a method according to any of claims 2 to 14.

**18.** A computer program comprising computer program code which when being executed on a computer enables said computer to carry out a method according to one of claims 1 to 14.

**Patentansprüche**

**1.** Computer-implementiertes Verfahren, um in einem Computernetzwerk die Identität eines nachweisenden Knotens P durch eine verifizierenden Knoten V zu verifizieren, um den Knoten P als den legitimen Eigentümer eines Public-Key-Zertifikats C nachzuweisen, wobei das Verfahren aufweist:

Nachweisen durch Knoten P gegenüber dem verifizierenden Knoten V, dass Knoten P den geheimen Schlüssel $x_p$ kennt, ohne $x_p$ zu offenbaren, wobei:

der geheime Schlüssel $x_p$ ein geheimes Wissen darstellt, das durch den Knoten P und eine Zertifizierungsauthorität CA geteilt wird, die das Zertifikat C für den Knoten P ausgestellt hat, wobei das Zertifikat C, das durch die Zertifizierungsauthorität auf P ausgestellt wurde, aufweist:

den öffentlichen Schlüssel des nachweisenden Knotens;
ein oder mehrere nicht geheime Elemente $m_p$, die die Identität des Eigentümers des Zertifikats, auf den das Zertifikat C ausgestellt wurde und die Zertifizierungsauthorität identifizieren;
einen nicht geheimen Wert $S_P$, der unter Verwendung eines kryptographischen Verfahrens basierend auf dem geheimen Wert $x_p$ sowie einem oder mehreren anderen nicht geheimen Elementen $m_p$ des Zertifikats C erzeugt wurde, und zwar so, dass der damit erzeugte Wert $S_P$ zwar auf dem Wert $x_p$ basiert, ihn aber nicht offenbart, wobei der nicht geheime Wert $S_P$ eine Signatur von einem oder mehreren anderen nicht geheimen Elementen $m_p$ des Zertifikats ist, wobei die Signatur erzeugt wurde basierend auf Exponentialbildung von $m_p$ mit Exponenten $x_p$ ; und wobei das Zertifikat ferner aufweist:

eine Signatur, die erzeugt wurde basierend auf $S_P$ und auf einem oder mehreren anderen nicht geheimen Elementen des Zertifikats unter Verwendung des privaten Schlüssels der Zertifizierungsauthorität;
wobei das Nachweisen der Kenntnis von $x_p$ ohne das Offenbaren von $x_p$ unter Verwendung von $S_P$ gegenüber dem Verifizierer V P als den legitimen Eigentümer des Zertifikats C ausweist, wobei der Nachweis umfasst:

Wählen eines Zufallswerts durch den verifizierenden Knoten V und Erzeugen einer Challenge basierend auf Exponentialbildung von $m_p$ mit a im Exponenten oder basierend auf Exponentialbildung von $S_P$ mit a im Exponenten, wobei die Challenge zum Knoten P gesandt wird;
Exponentialbildung der Challenge durch Knoten P mit $x_p$ im Exponenten, falls die Challenge auf $m_p$ basiert oder mit $1/x_p$ im Exponenten, falls die Challenge auf $S_P$ basiert, sowie Absenden des Ergebnisses an Knoten V als Nachweis; und
Verifizieren der Identität von P durch Vergleich des Nachweises, der vom Knoten P an den Knoten V übersandt wurde, mit einem Wert, der vom Knoten V berechnet wurde, und zwar durch Exponentialbildung von entweder $S_P$ oder $m_p$ mit a als Exponenten.

**2.** Verfahren nach Anspruch 1, wobei das Verfahren dazu dient, zu verifizieren, dass das Zertifikat C, das durch ein nachweisenden Knoten P zum Nachweis seiner Identität gegenüber einem Knoten V verwendet wurde, nicht widerrufen wurde, und/oder zum Verifizieren der Identität des Knotens P, selbst dann, wenn keine Konnektivität mit einem festen Netz verfügbar ist, und/oder zum Verifizieren, dass das Paar aus öffentlichem/privatem Schlüssel, das dem Zertifikat C zugeordnet ist, nicht kompromittiert wurde.

3. Verfahren nach Anspruch 1 oder 2, wobei der nicht geheime Wert $S_P$ unter Verwendung einer kryptographischen Funktion k erzeugt wurde gemäß $S_P = k(m_p, x_p)$ und wobei das Verfahren aufweist:

Erzeugen einer Challenge f durch den Knoten V basierend auf einer beliebigen Zahl gemäß

$$f = f(a, g(m_p, x_p))$$

und Senden der Challenge zum Knoten P;
Erzeugen eines Nachweises R durch Knoten P gemäß

$$R(x_p, f(a, g(m_p, x_p)))$$

wobei die Funktion R und eine weitere Funktion R' so gewählt werden, dass der Nachweis durch Knoten V verifiziert werden kann durch erneutes Berechnen des Nachweises ohne Kenntnis des Wertes $x_p$ unter Verwendung der Funktion

$$R' = R'(m_p, S_P, a);$$

Verifizieren des Nachweises R durch den Knoten V mit dieser Funktion R' = R' $(m_p, S_p, a)$.

4. Verfahren nach einem der Ansprüche 1 bis 3, ferner aufweisend:

Verschlüsseln der Challenge, die durch Knoten V erzeugt wurde, mit dem öffentlichen Schlüssel des Knotens P und Absenden der Challenge an P in verschlüsselter Form;
Entschlüsseln der empfangenen verschlüsselten Challenge durch den Knoten P unter Verwendung seines privaten Schlüssels.

5. Verfahren nach einem der Ansprüche 1 - 4, ferner aufweisend:

Hinzufügen eines den verifizierenden Knoten V identifizierenden Werts zur Challenge;
Absenden der Challenge einschließlich des hinzugefügten Wertes zum Knoten P;
Verschlüsseln der Challenge einschließlich des hinzugefügten Wertes durch P unter Verwendung des privaten Schlüssels von P und Absenden der so verschlüsselten Challenge zum Knoten V.

6. Verfahren nach Anspruch 5, wobei der hinzugefügte Wert aufweist:

einen Wert $S_V$, der erzeugt wurde unter Verwendung eines kryptographischen Verfahrens basierend auf dem geheimen Wert $x_V$, den sich Knoten V und eine Zertifizierungsauthorität teilen und einem oder mehreren anderen nicht geheimen Elementen $m_V$ eines Zertifikats des Knotens V derart, dass der so erzeugte Wert $S_V$ auf $x_V$ basiert, aber diesen nicht offenbart.

7. Verfahren nach einem der Ansprüche 1 bis 6, ferner aufweisend:

Hinzufügen eines Session-Identifizierers und/oder einer Nonce zu der Nachricht, die an V gesandt wird, wenn der Wert $S_P$ dem Knoten V präsentiert wird;
ferner Hinzufügen einer verschlüsselten Version der Nachricht, die basierend auf dem privaten Schlüssel des Knotens P erzeugt wurde;
Hinzufügen eines Session-Identifizierers und/oder einer Nonce zu der Challenge, die durch den Knoten V erzeugt wird und an Knoten P übersandt wird;
Verschlüsseln der Challenge unter Verwendung des privaten Schlüssels von Knoten V;

Verschlüsseln der Challenge unter Verwendung des öffentlichen Schlüssels von Knoten P.

**8.** Verfahren nach einem der Ansprüche 1 bis 7, ferner aufweisend:

Hinzufügen eines Session-Identifizierers $sid_P$ und/oder einer Nonce $n_P$ zu der Nachricht, die an V abgesandt wird, wenn der Wert $S_P$ dem Knoten V präsentiert wird;
ferner Hinzufügen einer verschlüsselten Version der Nachricht mit dem privaten Schlüssel des Knotens P;
Hinzufügen eines Session-Identifizierers $sid_V$ und des Session-Identifizierers $sid_P$, der vorher von P an $S_V$ gesandt wurde zu $S_V$ und zu der Challenge, die durch den Knoten V erzeugt wurde;
Verschlüsseln eines ersten Werts $val_1$, der die Challenge aufweist, des Session-Identifizierers $sid_V$, von $S_V$, der Nonce $n_P$, die um eins inkrementiert werden kann und einer Nonce $n_V$ unter Verwendung des privaten Schlüssels V;
Verschlüsseln eines zweiten Werts, der die Challenge aufweist, der Nonce $n_P$, die um eins inkrementiert werden kann, der Nonce $n_V$ und des Wertes $val_1$, der mit dem privaten Schlüssel des Knotens V verschlüsselt wurde, unter Verwendung des öffentlichen Schlüssels von Knoten P;
Absenden von $sid_P$, von $sid_V$, von $S_V$ und des zweiten Werts, der mit dem öffentlichen Schlüssel von Knoten P verschlüsselt wurden;
Verschlüsseln eines dritten Werts, der den Nachweis umfaßt, von $S_V$, des Werts, der den Knoten P identifiziert, der Nonce $n_V$, die um eins inkrementiert werden kann, unter Verwendung des privaten Schlüssels von Knoten P;
Verschlüsseln eines vierten Werts, der den Wert, der den Knoten P identifiziert; aufweist, der Nonce $n_V$, die um eins inkrementiert werden kann und des dritten Werts, der mit dem privaten Schlüssel von Knoten P verschlüsselt ist, unter Verwendung des öffentlichen Schlüssels von Knoten V;
Absenden der Session-Identifizierer $sid_P$ und $sid_V$ und des verschlüsselten vierten Wertes, der mit dem öffentlichen Schlüssel von Knoten V verschlüsselt wurde, an Knoten V.

**9.** Verfahren zum Erzeugen eines Public-Key-Zertifikats, das verwendet werden soll, um die Identität eines nachweisenden Knotens P als legitimen Eigentümer des Public-Key-Zertifikats in einem Netzwerk nachzuweisen, wobei das Verfahren aufweist:

Verteilen von Wissen über einen geheimen Schlüssel $x_p$ zwischen einer Zertifizierungsauthorität und Knoten P derart, dass beide das Wissen Teilen;
Berechnen eines nicht geheimen Wertes $S_P$ basierend auf einem oder mehreren öffentlichen Elementen $m_p$ des Zertifikats auf die Art, dass der nicht geheime Wert $S_P$ nicht den geheimen Schlüssel $x_p$ offenbart;
Einschließen des nicht geheimen Wertes $S_P$ in ein Zertifikat, das durch die Zertifizierungsauthorität auf den Knoten P ausgestellt wird, und
Hinzufügen einer Signatur zu dem Zertifikat, die erzeugt wird unter Verwendung des privaten Schlüssels der Zertifizierungsauthorität und die auf dem nicht geheimen Wert $S_P$ basiert, sowie auf einem oder mehreren nicht geheimen Elementen des Zertifikats, wobei das Zertifikat C aufweist:

den öffentlichen Schlüssel des nachweisenden Knotens;
ein oder mehrere nicht geheime Element, die die Identität des Eigentümers des Zertifikats, auf den das Zertifikat C ausgestellt wurde, und die Zertifizierungsauthorität identifizieren, wobei das nicht geheime Element $S_P$ eine Signatur von einem oder mehreren anderen nicht geheimen Elementen $m_p$ ist, die erzeugt wird durch Exponentialbildung von $m_p$ mit $x_p$ als Exponenten, und
eine Signatur, die erzeugt wird basierend auf $S_P$ und einem oder mehreren anderen nicht geheimen Elementen des Zertifikats unter Verwendung des privaten Schlüssels der Zertifizierungsauthorität, so dass die Identität des nachweisenden Knotens verifiziert werden kann durch die folgenden Schritte:

Wählen eines Zufallswerts a durch den verifizierenden Knoten V und Erzeugen einer Challenge basierend auf Exponentialbildung von $m_p$ mit $x_p$ als Exponenten oder basierend auf Exponentialbildung von $S_P$ mit a als Exponenten, wobei die Challenge an den Knoten P abgesandt wird;
Exponentialbildung durch Knoten P der Challenge mit $x_p$ als Exponent, falls die Challenge auf $m_p$ basiert oder mit $1/x_p$ als Exponent, falls die Challenge auf $S_p$ basiert, sowie Absenden des Ergebnisses an Knoten V als Nachweis; und
Verifizieren der Identität von P durch Vergleich des Nachweises, der von Knoten P an Knoten V abgesandt wurde, mit einem Wert, der durch Knoten V berechnet wird durch Exponentialbildung von entweder $S_P$ oder $m_p$ mit a als Exponenten.

**10.** Verfahren nach Anspruch 9, wobei der nicht geheime Wert $S_p$ berechnet wird basierend auf Exponentialbildung von $m_p$ mit $x_p$ als Exponenten.

**11.** Verfahren nach einem der Ansprüche 1 bis 10, wobei zusätzlich zu seinem Wissen über den geheimen Schlüssel $x_p$ der Knoten P Kenntnis hat von einem öffentlichen Schlüssel $e_p$ oder diesen öffentlichen Schlüssel $e_p$, der dem geheimen Schlüssel $x_p$ entspricht, erzeugen kann, wobei, jedoch $e_p$ vom Knoten P geheim gehalten wird, falls nicht eine Widerrufsanforderung nötig wird, um den Knoten P in die Lage zu versetzen, falls nötig eine Widerrufsanforderung basierend auf dem öffentlichen Schlüssel $e_p$ auszugeben.

**12.** Datenstruktur, die ein Zertifikat repräsentiert, das verwendet wird, um die Identität des Knotens P zu verifizieren, wobei die Datenstruktur erzeugt wird unter Verwendung des Verfahrens gemäß Ansprüchen 9 bis 11.

**13.** Verfahren zum Widerrufen eines Zertifikats, welches erzeugt wurde und ausgestellt wurde auf einen Knoten P gemäß einem Verfahren nach einem der Ansprüche 9 bis 12, wobei das Verfahren aufweist:

Erzeugen und Offenbaren einer Nachricht, welche $S_P$ und den geheimen Schlüssel $x_p$ oder seinen entsprechenden öffentlichen Schlüssel $e_p$ aufweist sowie einer Signatur der Nachricht, die erzeugt wurde unter Verwendung des privaten Schlüssels von Knoten P.

**14.** Verfahren nach einem der Ansprüche 1 bis 13, ferner aufweisend:

Regelmäßiges Austauschen von Widerrufsinformationen zwischen Knoten des Netzwerks.

**15.** Vorrichtung um in einem Computernetzwerk die Identität eines nachweisenden Knotens P durch eine verifizierenden Knoten V zu verifizieren, um den Knoten P als den legitimen Eigentümer eines Public-Key-Zertifikats C nachzuweisen, wobei die Vorrichtung aufweist:

eine Nachweiseinheit zum Nachweisen durch Knoten P gegenüber dem verifizierenden Knoten V, dass Knoten P den geheimen Schlüssel $x_p$ kennt, ohne $x_p$ zu offenbaren, wobei:

der geheime Schlüssel $x_p$ ein geheimes Wissen darstellt, das durch den Knoten P und eine Zertifizierungsauthorität CA geteilt wird, die das Zertifikat C für den Knoten P ausgestellt hat,
wobei das Zertifikat C, das durch die Zertifizierungsauthorität auf P ausgestellt wurde, aufweist:

den öffentlichen Schlüssel des nachweisenden Knoten;
ein oder mehrere nicht geheime Elemente $m_p$, die die Identität des Eigentümers des Zertifikats, auf den das Zertifikat C ausgestellt wurde und der Zertifizierungsauthorität identifizieren;
einen nicht geheimen Wert $S_P$, der unter Verwendung eines kryptographischen Verfahrens basierend auf dem geheimen Wert $x_p$ sowie einem oder mehreren anderen nicht geheimen Elementen $m_p$ des Zertifikats C erzeugt wurde, und zwar so, dass der damit erzeugte Wert $S_P$ zwar auf dem Wert $x_p$ basiert, ihn aber nicht offenbart, wobei der nicht geheime Wert $S_P$ eine Signatur von einem oder mehreren anderen nicht geheimen Elementen $m_p$ des Zertifikats ist, wobei die Signatur erzeugt wurde basierend auf Exponentialbildung von $m_p$ mit Exponenten $x_p$; und wobei das Zertifikat ferner aufweist:

eine Signatur, die erzeugt wurde basierend auf $S_P$ und auf einem oder mehreren anderen nicht geheimen Elementen des Zertifikats unter Verwendung des privaten Schlüssels der Zertifizierungsauthorität;
wobei die Nachweiseinheit gegenüber Verifizierer V die Kenntnis von $x_p$ unter Verwendung von $S_P$ nachweist, ohne $x_p$ zu offenbaren und P als legitimen Eigentümer des Zertifikats C verifiziert sowie ferner Folgendes ausführt:

Wählen eines Zufallswerts durch den verifizierenden Knoten V und Erzeugen einer Challenge basierend auf Exponentialbildung von $m_p$ mit a im Exponenten oder basierend auf Exponentialbildung von $S_P$ mit a im Exponenten, wobei die Challenge zum Knoten P gesandt wird;
Exponentialbildung der Challenge durch Knoten P mit $x_p$ im Exponenten, falls die Challenge auf $m_p$ basiert oder mit $1/x_p$ im Exponenten, falls die Challenge auf $S_P$ basiert, sowie Absenden des Ergebnisses an Knoten V als Nachweis; und
Verifizieren der Identität von P durch Vergleich des Nachweises, der vom Knoten P an den

**EP 1 796 012 B1**

Knoten V übersandt wurde mit einem Wert, der vom Knoten V berechnet wurde, und zwar durch Exponentialbildung von entweder $S_P$ oder $m_p$ mit a als Exponenten.

**16.** Vorrichtung zum Erzeugen eines Public-Key-Zertifikats, das verwendet werden soll, um die Identität eines nachweisenden Knotens P als legitimen Eigentümer des Public-Key-Zertifikats in einem Netzwerk nachzuweisen, wobei die Vorrichtung aufweist:

eine Verteilungseinheit zum Verteilen von Wissen über einen geheimen Schlüssel $x_p$ zwischen einer Zertifizierungsauthorität und Knoten P derart, dass beide das Wissen Teilen;

eine Berechnungseinheit zum Berechnen eines nicht geheimen Wertes $S_P$ basierend auf einem oder mehreren öffentlichen Elementen $m_p$ des Zertifikats auf die Art, dass der nicht geheime Wert $S_P$ nicht den geheimen Schlüssel $x_p$ offenbart;

eine Einschließungseinheit zum Einschließen des nicht geheimen Wertes $S_P$ in ein Zertifikat, das durch die Zertifizierungsauthorität auf den Knoten P ausgestellt wird, und

eine Hinzufügeeinheit zum Hinzufügen einer Signatur zu dem Zertifikat, die erzeugt wird unter Verwendung des privaten Schlüssels der Zertifizierungsauthorität und die auf dem nicht geheimen Wert $S_P$ basiert, sowie auf einem oder mehreren nicht geheimen Elementen des Zertifikats, wobei das Zertifikat C aufweist:

den öffentlichen Schlüssel des nachweisenden Knotens;

ein oder mehrere nicht geheime Elemente, die die Identität des Eigentümers des Zertifikats, auf den das Zertifikat C ausgestellt wurde, und der Zertifizierungsauthorität identifizieren, wobei das nicht geheime Element $S_P$ eine Signatur von einem oder mehreren anderen nicht geheimen Elementen $m_p$ ist, die erzeugt wird durch Exponentialbildung von $m_p$ mit $x_p$ als Exponenten, und

eine Signatur, die erzeugt wird basierend auf $S_P$ und einem oder mehreren anderen nicht geheimen Elementen des Zertifikats unter Verwendung des privaten Schlüssels der Zertifizierungsauthorität, so dass die Identität des nachweisenden Knotens verifiziert werden kann durch die folgenden Schritte:

Wählen eines Zufallswerts a durch den verifizierenden Knoten V und Erzeugen einer Challenge basierend auf Exponentialbildung von $m_p$ mit $x_p$ als Exponenten oder basierend auf Exponentialbildung mit $S_P$ mit a als Exponenten, wobei die Challenge an den Knoten P abgesandt wird;

Exponentialbildung durch Knoten P der Challenge mit $x_p$ als Exponent, falls die Challenge auf $m_p$ basiert oder mit $1/x_p$ als Exponent, falls die Challenge auf $S_P$ basiert, sowie Absenden des Ergebnisses an Knoten V als Nachweis; und

Verifizieren der Identität von P durch Vergleich des Nachweises, der von Knoten P an Knoten V abgesandt wurde, mit einem Wert, der durch Knoten V berechnet wird durch Exponentialbildung von entweder $S_P$ oder $m_p$ mit a als Exponenten.

**17.** Vorrichtung gemäß Anspruch 15 oder 16, ferner aufweisend:

Eine Einrichtung zum Ausführen eines Verfahrens gemäß einem der Ansprüche 2 bis 14.

**18.** Computerprogramm mit Computerprogrammcode, der wenn er auf einem Computer ausgeführt wird, den Computer in die Lage versetzt, ein Verfahren gemäß einem der Ansprüche 1 bis 14 auszuführen.

**Revendications**

**1.** Procédé mis en oeuvre par ordinateur pour vérifier dans un réseau informatique l'identité d'un noeud de test P par un noeud de vérification V pour vérifier que ledit noeud P a la qualité de propriétaire légitime d'un certificat de clé publique C, ledit procédé comportant les étapes consistant à :

démontrer par ledit noeud P audit noeud de vérification V que le noeud P connaît la clé secrète $x_p$ sans divulguer $x_p$, alors que :

ladite clé secrète $x_p$ est une information secrète partagée par ledit noeud P et par une autorité de certification CA qui a délivré ledit certificat C au noeud P,

ledit certificat C, qui a été délivré au noeud P par ladite autorité de certification comprend :

**19**

la clé publique dudit noeud de test ;

un ou plusieurs éléments non secrets $m_p$ identifiant l'identité du propriétaire du certificat auquel ledit certificat C a été délivré et l'autorité de certification,

une valeur non secrète $S_P$, qui a été générée en utilisant un procédé cryptographique basé sur ladite valeur secrète xpet un ou plusieurs autres éléments non secrets $m_p$ dudit certificat C de telle manière que la valeur ainsi générée $S_p$ est basée sur, mais ne divulgue pas $x_p$, ladite une valeur non secrète $S_p$ étant la signature d'un ou plusieurs autres éléments non secrets $m_p$ dudit certificat, ladite signature ayant été générée sur la base d'une élévation de $m_p$ à $x_p$ ; et ledit certificat comportant en outre :

une signature qui a été générée sur la base de $S_p$ et d'un ou plusieurs autres éléments non secrets dudit certificat utilisant la clé privée de ladite autorité de certification ;

alors que ladite démonstration au vérificateur V de l'information de $x_p$ sans divulguer $x_p$ en utilisant $S_p$ vérifie P en qualité de propriétaire légitime du certificat C, tandis que ladite démonstration comporte les étapes consistant à :

choisir une valeur aléatoire a par ledit noeud de vérification V et générer une demande d'accès basée sur l'élévation de $m_p$ à a ou sur l'élévation de $S_p$ à a, ladite demande d'accès étant transmise au noeud P ;

élever par le noeud P ladite demande d'accès à $x_p$ si ladite demande d'accès est basée sur $m_p$ ou à $1/x_p$ si ladite demande d'accès est basée sur $S_p$ et transmettre le résultat au noeud V en qualité de ladite preuve ; et

vérifier l'identité de P en comparant la preuve transmise du noeud P au noeud V avec une valeur calculée par le noeud V via une élévation de $S_p$ ou de $m_p$ à a.

2.  Procédé selon la revendication 1, dans lequel ledit procédé est utilisé pour vérifier que le certificat C, utilisé par un noeud de test P pour prouver son identité à un noeud V, n'a pas été révoqué, et/ou pour vérifier l'identité du noeud P y compris en l'absence de connectivité disponible à un réseau fixe et/ou pour vérifier que la paire clé publique/clé privée associée au certificat C n'a pas été compromise.

3.  Procédé selon la revendication 1 ou 2, dans lequel ladite valeur non secrète $S_p$ a été générée en utilisant une fonction cryptographique k en tant que $S_p$= k $(m_p, x_p)$, et ledit procédé comporte les étapes consistant à :

générer une demande d'accès f par ledit noeud V sur la base d'un nombre arbitraire a en tant que

$$\mathtt{f \ = \ f \ (a, \ g(}m_p\mathtt{, \ }x_p\mathtt{))}$$

et transmettre ladite demande d'accès au noeud P ;
générer par ledit noeud P une preuve R en tant que

$$\mathtt{R(}x_p\mathtt{, \quad f \quad (a, \quad g(}m_p\mathtt{, \quad }x_p\mathtt{)))}$$

et transmettre ladite preuve au noeud V,
alors que la fonction R et une fonction supplémentaire R' sont sélectionnées de sorte que la preuve peut être vérifiée par le noeud V en recalculant la preuve sans connaître la valeur $X_p$ en utilisant la fonction

$$\mathtt{R' \ = \ R' \ (}m_p\mathtt{, \ }S_p\mathtt{, \ a) \ ;}$$

vérifier ladite preuve R par ledit noeud V avec ladite fonction R' = R' $(m_p, S_P, a)$.

4.  Procédé selon l'une quelconque des revendications 1 à 3, comportant en outre les étapes consistant à :

chiffrer ladite demande d'accès générée par le noeud V avec la clé publique du noeud P et transmettre ladite demande d'accès à P d'une manière chiffrée ;

déchiffrer la demande d'accès chiffrée reçue par le noeud P en utilisant sa clé privée.

**5.** Procédé selon l'une quelconque des revendications 1 à 4, comportant en outre les étapes consistant à :

ajouter à ladite demande d'accès une valeur identifiant le noeud de vérification V ;
transmettre ladite demande d'accès comportant ladite valeur ajoutée au noeud P ;
chiffrer ladite demande d'accès comportant ladite valeur ajoutée par P en utilisant la clé privée P et transmettre la demande d'accès ainsi chiffrée au noeud V.

**6.** Procédé selon la revendication 5, dans lequel ladite valeur ajoutée comprend :

une valeur $S_v$ qui a été générée en utilisant un procédé cryptographique basé sur la valeur secrète $x_v$ partagée par le noeud V et une autorité de certification et un ou plusieurs autres éléments non secrets $m_v$ d'un certificat du noeud V de telle manière que la valeur ainsi générée $S_v$ est basée sur, mais ne divulgue pas, $x_v$.

**7.** Procédé selon l'une quelconque des revendications 1 à 6, comportant en outre les étapes consistant à :

ajouter un identifiant de session et/ou un nombre aléatoire secret, « nonce », audit message qui est transmis à V lors de la présentation de ladite valeur $S_p$ audit noeud V ;
ajouter en outre une version chiffrée dudit message qui est générée sur la base de la clé privée du noeud P ;
ajouter un identifiant de session et/ou un nombre aléatoire secret, « nonce », à ladite demande d'accès qui est générée par le noeud V et transmise au noeud P ;
chiffrer ladite demande d'accès en utilisant la clé privée du noeud V ;
chiffrer ladite demande d'accès en utilisant la clé publique du noeud p.

**8.** Procédé selon l'une quelconque des revendications 1 à 7, comportant en outre les étapes consistant à :

ajouter un identifiant de session $Sid_p$ et/ou un nombre aléatoire secret, « nonce », $n_p$ audit message qui est transmis à V lors de la présentation de ladite valeur $S_p$ audit noeud V ;
ajouter en outre une version chiffrée dudit message avec la clé privée du noeud P ;
ajouter un identifiant de session $Sid_v$ et ledit identifiant de session $Sid_p$ précédemment envoyé par P, à ladite valeur $S_v$ et à ladite demande d'accès qui est générée par le noeud V ;
chiffrer une première valeur $val_1$ comportant ladite demande d'accès, ledit identifiant de session $Sid_v$, ladite valeur $S_v$, ledit nombre aléatoire secret, « nonce », $n_p$, qui peut être incrémenté de un et un nombre aléatoire secret, « nonce », $n_v$, en utilisant la clé privée du noeud V ;
chiffrer une deuxième valeur comportant ladite demande d'accès, ledit nombre aléatoire secret, « nonce », $n_p$ qui peut être incrémenté de un, ledit nonce $n_v$ et lesdites valeurs $val_1$ chiffrées avec la clé privée du noeud V, en utilisant la clé publique du noeud P ;
transmettre ledit $Sid_p$, ledit $Sid_v$, ladite valeur $S_v$ et ladite deuxième valeur chiffrée avec la clé publique du noeud P ;
chiffrer une troisième valeur comportant ladite preuve, ladite valeur $S_v$, ladite valeur identifiant ledit noeud P, ledit nombre aléatoire secret, « nonce », $n_v$ qui peut être incrémenté de un, en utilisant la clé privée du noeud P ;
chiffrer une quatrième valeur comportant ladite valeur identifiant le noeud P, ledit nombre aléatoire secret, « nonce », $n_v$ qui peut être incrémenté de un et ladite troisième valeur chiffrée avec la clé privée du noeud P, en utilisant la clé publique du noeud V ;
transmettre lesdits identifiants de session $Sid_p$ et $Sid_v$ et ladite quatrième valeur chiffrée, chiffrés avec la clé publique du noeud V au noeud V.

**9.** Procédé pour générer un certificat de clé publique à utiliser pour vérifier l'identité d'un noeud de test P dans un réseau en tant que le propriétaire légitime dudit certificat de clé publique, ledit procédé comportant les étapes consistant à :

distribuer de l'information relative à une clé secrète $x_p$ entre une autorité de certification et un noeud P de sorte les deux partagent ladite information,
calculer une valeur non secrète $S_p$ sur la base d'un ou plusieurs éléments publiques $m_p$ dudit certificat de telle manière que ladite valeur non secrète $S_p$ ne divulgue pas la clé secrète $x_p$ ;

inclure ladite valeur non secrète $S_p$ dans un certificat émis au noeud P par ladite autorité de certification, et ajouter audit certificat une signature qui est générée en utilisant la clé privée de ladite autorité de certification et qui est basée sur ladite valeur non secrète $S_p$, sur un ou plusieurs éléments non secrets supplémentaires dudit certificat,

dans lequel ledit certificat C comprend

la clé publique dudit noeud de test ;
un ou plusieurs éléments non secrets identifiant l'identité du propriétaire du certificat auquel ledit certificat C a été délivré et l'autorité de certification, ledit élément non secret $S_p$ étant une signature d'un ou plusieurs autres éléments non secrets $m_p$ qui a été générée en élevant $m_p$ à $x_p$, et
une signature qui a été générée sur la base de $S_p$ et sur la base d'un ou plusieurs des autres éléments non secrets dudit certificat en utilisant la clé privée de ladite autorité de certification, de sorte que l'identité du noeud de test P peut être vérifiée par les étapes suivantes consistant à :

choisir une valeur aléatoire a par ledit noeud de vérification V et générer une demande d'accès basée sur l'élévation de $m_p$ à a ou sur l'élévation de $S_p$ à a, ladite demande d'accès étant transmise au noeud P ;
élever par le noeud P ladite demande d'accès à $x_p$ si ladite demande d'accès est basée sur $m_p$ ou à $1/x_p$ si ladite demande d'accès est basée sur $S_p$ et transmettre le résultat au noeud V en qualité de ladite preuve ; et
vérifier l'identité de P en comparant la preuve transmise du noeud P au noeud V avec une valeur calculée par le noeud V via une élévation de $S_p$ ou de $m_p$ à a.

10. Procédé selon la revendication 9, dans lequel ladite valeur non secrète $S_p$ est calculée sur la base de l'élévation de $m_p$, à $x_p$.

11. Procédé selon l'une des revendications 1 à 10, dans lequel en plus de son information de clé secrète $x_p$, le noeud P présente une information d'une clé publique $e_p$ ou peut générer cette clé publique $e_p$ correspondant à la clé secrète $x_p$ alors que, cependant, e p est gardée secrète par le noeud P à moins qu'une demande de révocation devienne nécessaire pour permettre au noeud P d'émettre une demande de révocation, le cas échéant, sur la base de ladite clé publique $e_p$.

12. Structure de données représentant un certificat à utiliser pour vérifier l'identité d'un noeud P, alors que ladite structure de données a été générée en utilisant le procédé selon les revendications 9 à 11.

13. Procédé pour révoquer un certificat qui a été généré et délivré à un noeud P selon le procédé selon l'une quelconque des revendications 9 à 12, ledit procédé comportant les étapes consistant à :

générer et divulguer un message comportant $S_p$ et la clé secrète $x_p$ ou sa clé publique correspondante $e_p$, et une signature dudit message qui a été générée en utilisant la clé privée du noeud P.

14. Procédé selon l'une quelconque des revendications 1 à 13, comportant en outre l'étape consistant à :

échanger régulièrement des informations de révocation entre les noeuds du réseau.

15. Dispositif pour vérifier, dans un réseau de communication, l'identité d'un noeud de test P au moyen d'un noeud de vérification V pour vérifier que ledit noeud P a la qualité de propriétaire légitime d'un certificat de clé publique C, ledit dispositif comportant :

une unité de test pour démontrer, par ledit noeud P, audit noeud de vérification V que le noeud P connaît la clé secrète $x_p$ sans divulguer la clé secrète $x_p$, alors que :

ladite clé secrète $x_p$ est une information secrète partagée par ledit noeud P et par une autorité de certification CA qui a délivré ledit certificat C au noeud P,
ledit certificat C, qui a été délivré au noeud P par ladite autorité de certification comprend :

la clé publique dudit noeud de test ;
un ou plusieurs éléments non secrets $m_p$ identifiant l'identité du propriétaire du certificat auquel ledit certificat C a été délivré et l'autorité de certification,

une valeur non secrète $S_p$, qui a été générée en utilisant un procédé cryptographique basé sur ladite valeur secrète $x_p$ et un ou plusieurs autres éléments non secrets $m_p$ dudit certificat C de telle manière que la valeur ainsi générée $S_p$ est basée sur, mais ne divulgue pas, $x_p$, ladite une valeur non secrète Spétant une signature dudit un ou desdits plusieurs autres éléments non secrets $m_p$ qui a été générée en élevant $m_p$ à $x_p$ ; et ledit certificat comportant en outre :

une signature qui a été générée sur la base de $S_p$ et d'un ou plusieurs autres éléments non secrets en utilisant la clé privée de ladite autorité de certification ;
alors que ladite unité de test démontre au vérificateur V sa connaissance de $x_p$ sans divulguer $x_p$ en utilisant $S_p$ et vérifie P en qualité de propriétaire légitime du certificat C, et met en outre en oeuvre les étapes consistant à :

choisir une valeur aléatoire a au moyen dudit noeud de vérification V et générer une demande d'accès basée sur l'élévation de $m_p$ à a ou sur l'élévation de $S_p$ à a, ladite demande d'accès étant transmise au noeud P ;
élever, par le noeud P, ladite demande d'accès à $x_p$ si ladite demande d'accès est basée sur $m_p$ ou à $1/x_p$ si ladite demande d'accès est basée sur $S_p$ et transmettre le résultat au noeud V en qualité de ladite preuve ; et
vérifier l'identité de P en comparant la preuve transmise du noeud P au noeud V avec une valeur calculée par le noeud V via une élévation de $S_p$ ou de $m_p$ à a.

**16.** Dispositif pour générer un certificat de clé publique à utiliser pour vérifier l'identité d'un noeud de test P dans un réseau en tant que le propriétaire légitime dudit certificat de clé publique, ledit dispositif comportant :

une unité de distribution pour distribuer l'information relative à une clé secrète $x_p$ entre une autorité de certification et un noeud P de sorte les deux partagent ladite information,
une unité de calcul pour calculer une valeur non secrète $S_p$ sur la base d'un ou plusieurs éléments publics $m_p$ dudit certificat d'une telle manière que ladite valeur non secrète $S_p$ ne divulgue pas la clé secrète $x_p$ ;
une unité d'incorporation pour inclure ladite valeur non secrète $S_p$ dans un certificat délivré au noeud P par ladite autorité de certification, et
une unité d'ajout pour ajouter audit certificat une signature qui est générée en utilisant la clé privée de ladite autorité de certification et qui est basée sur ladite valeur non secrète $S_p$, et sur un ou plusieurs éléments non secrets supplémentaires dudit certificat,

dans lequel ledit certificat C comprend

la clé publique dudit noeud de test ;
un ou plusieurs éléments non secrets identifiant l'identité du propriétaire du certificat auquel ledit certificat C a été délivré et l'autorité de certification, ledit élément non secret $S_p$ étant une signature dudit un ou desdits plusieurs autres éléments non secrets $m_p$ qui a été générée en élevant $m_p$ à $x_p$, et
une signature qui a été générée sur la base de $S_p$ et sur la base d'un ou plusieurs desdits autres éléments non secrets en utilisant la clé privée de ladite autorité de certification, de sorte que l'identité du noeud de test P peut être vérifiée par les étapes suivantes consistant à :

choisir une valeur aléatoire a par ledit noeud de vérification V et générer une demande d'accès basée sur l'élévation de $m_p$ à a ou sur l'élévation de $S_p$ à a, ladite demande d'accès étant transmise au noeud P ;
élever par le noeud P ladite demande d'accès à $x_p$ si ladite demande d'accès est basée sur $m_p$ ou à $1/x_p$ si ladite demande d'accès est basée sur $S_p$ et transmettre le résultat au noeud V en qualité de ladite preuve ; et
vérifier l'identité de P en comparant la preuve transmise du noeud P au noeud V à une valeur calculée par le noeud V via une élévation de $S_p$ ou de $m_p$ à a.

**17.** Dispositif selon la revendication 17 ou 18, comportant en outre :

un moyen pour mettre en oeuvre un procédé selon l'une quelconque des revendications 2 à 14.

**18.** Programme informatique comportant un code de programme informatique lequel, lorsqu'il est exécuté sur un ordinateur, permet audit ordinateur de mettre en oeuvre un procédé selon l'une quelconque des revendications 1 à 14.

Node V

Proof knowledge of $x_P$
without disclosing $x_P$

share knowledge of $x_P$

Node P

Issue Certificate C
to P

Certificate C

$m_P$

$S_P$

**Fig. 1A**

EP 1 796 012 B1

Verify R by $R' = R'(m_P, s_P, a)$

Node V

Proof $R = R(x_P, f = f(a, (g(m_P, x_P))))$

challenge $f = f(a, (g(m_P, x_P)))$

CA

share knowledge of $x_P$

Node P

Issue Certificate C
to P

Certificate C

$m_P$

$S_P = k(m_P, x_P)$

**Fig. 1B**

EP 1 796 012 B1

EP 1 796 012 B1

Subject (here P)

Issuer (here $CA_1$ )

P's public key (here $K_P$)

.

.

.

.

$n$

$S_P$    (here $m_P^{x_P} \bmod n$ )

$CA_1$ 's signature

Message $m_P$

The added fields

**Fig. 2**

**P**                                                    **V**

$$Cert_p$$

(1) $\longrightarrow$

*V   chooses   a   random   "a"*

$$Cert_v, \quad \{m_p^a\}_{K_P}$$

$\longleftarrow$ (2)

$$Sig_{K_p^{-1}}\{m_p^{a*x_p}, \quad m_v^{x_v}\}$$

(3) $\longrightarrow$

## Fig. 3

$$\mathbf{P}$$

$$sid_p, Cert_p, n_p, {}_{Sig_{K_p^{-1}}} \{sid_p, Cert_p, n_p\}$$

(1)

$$sid_p, sid_v, Cert_v, \{n_p+1, n_v, m_p^a, {}_{Sig_{K_v^{-1}}} \{m_p^a, sid_v, Cert_v, n_p+1, n_v\}\}_{K_p}$$

(2)

$$sid_P, sid_v, \{P, n_v+1, {}_{Sig_{K_P^{-1}}} \{m_p^{a*x_p}, m_v^{x_v}, P, n_v+1\}\}_{K_v}$$

(3)

**Fig. 4**

EP 1 796 012 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.L. RIVEST ; A. SHAMIR ; L.M. ADLEMAN.** A method for obtaining digital signatures and public-key cryptosystems. *Communications of the ACM,* 1978, vol. 21 (2), 120-126